# EUROPEAN PATENT APPLICATION

(11) **EP 3 104 619 A1**
(43) Date of publication of application: **14.12.2016**
(21) Application number: 14879805.1
(22) Date of filing: 17.12.2014
(51) Int. Cl.: H04N 21/41, H04N 21/426

(54) **TELEVISION SIGNAL RECEIVING SOCKET**

(30) Priority: 23.01.2014 CN 201420044154 U
(71) Applicant: Shenzhen State Micro Technology Co., Ltd, Shenzhen Guangdong 518057 (CN)
(72) Inventor: LI, Yanrong, Shenzhen Guangdong 518057 (CN); LIN, Kaipeng, Shenzhen Guangdong 518057 (CN); YU, Yong, Shenzhen Guangdong 518057 (CN); LEI, Yangmei, Shenzhen Guangdong 518057 (CN); SHEN, Jiqing, Shenzhen Guangdong 518057 (CN)
(74) Representative: Farrington, Graham
(86) International application number: PCT/CN2014/094031
(87) International publication number: WO 2015/109903

(57) **Abstract**

The present utility model discloses a television signal receiving socket. The television signal receiving socket includes a socket body with a cavity and a control circuit board received in the cavity. The socket body is provided with a receiving unit and a CA card slot and a USB through hole communicating with an external side of the socket body and the cavity, where the USB through hole is configured to receive a USB interface in the control circuit board, and the control circuit board includes a tuner, a demodulator, and a descrambling module; an input end of the tuner is connected to the receiving unit, and an output end of the tuner is connected to an input end of the demodulator; an output end of the demodulator is connected to an input end of the descrambling module, and an output end of the descrambling module is connected to the USB interface; and the descrambling module is electrically connected to the CA card slot. The present utility model can receive multiple kinds of television program signals, so as to facilitate a user and reduce product cost and using cost.

## Description

### TECHNICAL FIELD

The present utility model relates to the field of television signal receiving technologies, and in particular, to a television signal receiving socket.

### BACKGROUND

As the broadband access technology rapidly develops, multiple platforms, such as a television screen, a PC screen, and a mobile phone screen, are mutually connected, which therefore enhances capabilities of the Internet access. Because an Internet television provides richer program content than a traditional cable television, it has become inevitable that the Internet television will take the place of the traditional cable television.

Further, the Internet television provides a user with richer and more practical interactive services, such as online network game, online music enjoyment, real-time weather inquiry, real-time stock inquiry, and news flash. Therefore, it is highly favored by consumers. The Internet television directly accesses a network to implement media content playing, but the current Internet television does not support a live DVB (Digital Video Broadcasting) broadcast television program. However, because of its advantages of low cost and high image quality, the market demand for the DVB broadcast television program is still high. Therefore, when a user needs to watch a DVB broadcast television program, a digital television receiving apparatus is still required to connect to a cable of the cable television so as to implement signal receiving. However, configuration of the current digital television receiving apparatus increases cost for the user, and a television connection structure also becomes complicated; in addition, with development of an ultra-thin television, there is no extra space on the television or its bracket for placing the digital television receiving apparatus, which also causes inconvenience in assembly.

### SUMMARY

A main purpose of the present utility model is to provide a television signal receiving socket, so as to facilitate a user, save installation space, and reduce using cost for the user.

To achieve the foregoing purpose, the present utility model provides a television signal receiving socket. The television signal receiving socket includes a socket body with a cavity and a control circuit board received in the cavity. The socket body is provided with a receiving unit and defines a CA card slot and a USB through hole communicating with an external side of the socket body and the cavity, where the USB through hole is configured to receive a USB interface in the control circuit board, and the control circuit board includes a tuner, a demodulator, and a descrambling module; an input end of the tuner is connected to the receiving unit, and an output end of the tuner is connected to an input end of the demodulator; an output end of the demodulator is connected to an input end of the descrambling module, and an output end of the descrambling module is connected to the USB interface; the descrambling module is electrically connected to the CA card slot.

Preferably, a television program signal received by the receiving unit includes a web television signal and a cable television signal.

Preferably, one end of the cavity is set as an opening, a bracket thread-connected to the socket body is received in the cavity, one side of the bracket faces the opening, and the CA card slot is defined between another side that is opposite to the one side and the socket body, a card insertion opening which is used to insert the CA card into the CA card slot is defined in one side of the socket body corresponding to the USB through hole; the control circuit board is arranged on one side of the bracket deviating from the CA card slot, a first through hole communicating with the cavity and the CA card slot is defined in a position of the bracket corresponding to a card holder on the control circuit board; when the CA card is inserted into the CA card slot, in a position of the first through hole, a chip in the CA card abuts against and fits the card holder on the control circuit board.

Preferably, a protective cover is included, the protective cover is arranged on the socket body, a through slot is defined in a position in the protective cover corresponding to the card insertion opening and the USB through hole, the socket body is provided with a fastener, the protective cover is provided with a fastener base that is snap-fitted to the fastener, and the fastener and the fastener base are snap-fitted so as to fix and connect the protective cover and the socket body.

Preferably, a television signal cable connecting to the receiving unit is further included, where the television signal cable is configured to input the web television signal or the cable television signal.

Preferably, the control circuit board is provided with a cover plate on one side thereof deviating from the bracket, the cover plate is thread-connected to the socket body, and a second through hole through which the television signal cable passes is defined in a position in the cover plate corresponding to a cable television access end on the control circuit board.

Preferably, the control circuit board is provided with a pressing buckle configured to lock and fix the television signal cable to the control circuit board in a position thereof corresponding to the second through hole.

Preferably, the pressing buckle includes an arc-shaped body, the arc-shaped body is provided with a fixing part in each of two ends thereof, a screw hole is defined on each of the two fixing parts, the bracket is provided with a nut that penetrates the control circuit board in a position thereof corresponding to the screw hole, a screw is used to pass through the screw hole to connect to the nut, so that the pressing buckle is fixed on the bracket, and locks and fixes the television signal cable to the control circuit board.

Preferably, the card holder is a SIM card interface.

Preferably, the control circuit board is provided with at least one loop output interface, and the loop output interface is electrically connected to the receiving unit.

According to the television signal receiving socket disclosed in the present utility model, a socket body is provided with a receiving unit to receive multiple kinds of television signals. In addition, the socket body is also provided with a control circuit board that decrypts a received television signal and a CA card slot into which a CA card is inserted, an encrypted television program can be decrypted as long as the CA card is inserted into the CA card slot. To watch an encrypted digital television program, a user only needs to connect an Internet television to the television signal receiving socket, without the need of adding other devices. Therefore, compared with the prior art in which a digital television receiving apparatus is used for watching an encrypted digital television program, the television signal receiving socket reduces using cost for the user; in addition, the television signal receiving socket may be directly installed on the wall, so as to save installation space and facilitates the user.

### BRIEF DESCRIPTION OF DRAWINGS

FIG. 1 is a schematic view of an overall structure of a television signal receiving socket according to an embodiment of the present utility model;
FIG. 2 is an exploded view for FIG. 1;
FIG. 3 is an enlarged schematic view of a CA card in FIG. 1;
FIG. 4 is a schematic view of an assembly structure of a socket body and a bracket in a television signal receiving socket according to an embodiment of the present utility model;
FIG. 5 is a schematic view in which a control circuit board is assembled in FIG. 4;
FIG. 6 is a schematic view in which a cover plate is assembled in FIG. 5;
FIG. 7 is a schematic view in which a television signal cable is assembled in FIG. 6; and
FIG. 8 is a schematic diagram of a circuit of a control circuit board in a television signal receiving socket according to an embodiment of the present utility model.

Purpose implementation, functions, features, and advantages of the present utility model are further described with reference to the embodiments and accompanying drawings.

### DESCRIPTION OF EMBODIMENTS

It should be understood that, the described specific embodiments are only used to explain the present utility model, but not to limit the present utility model.

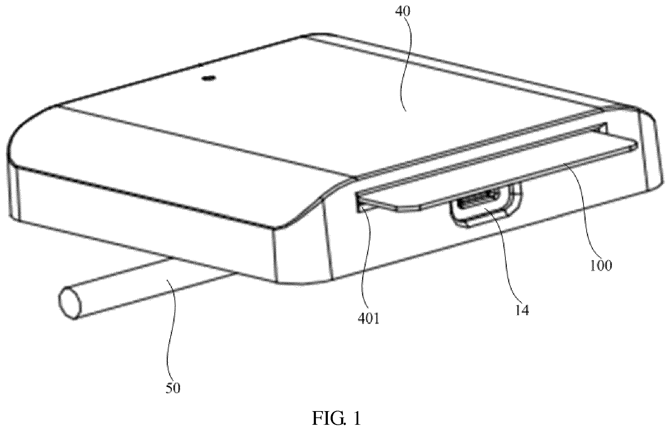

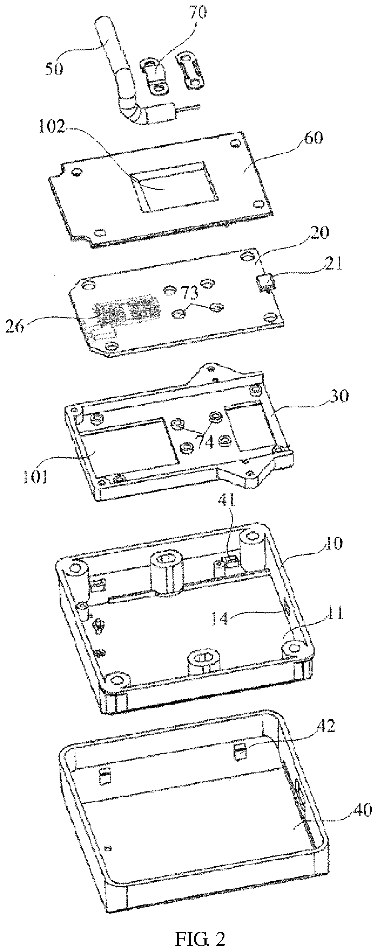

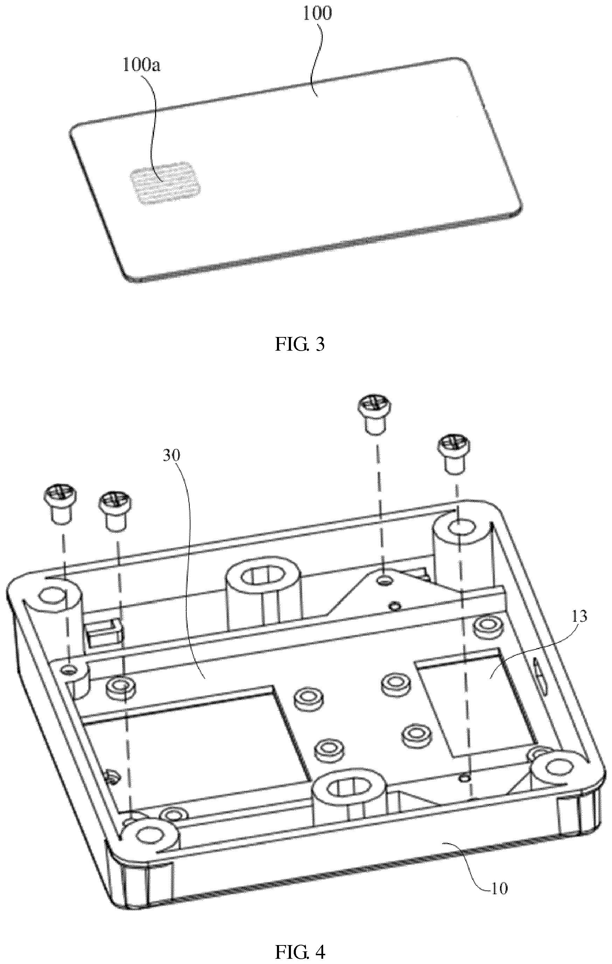

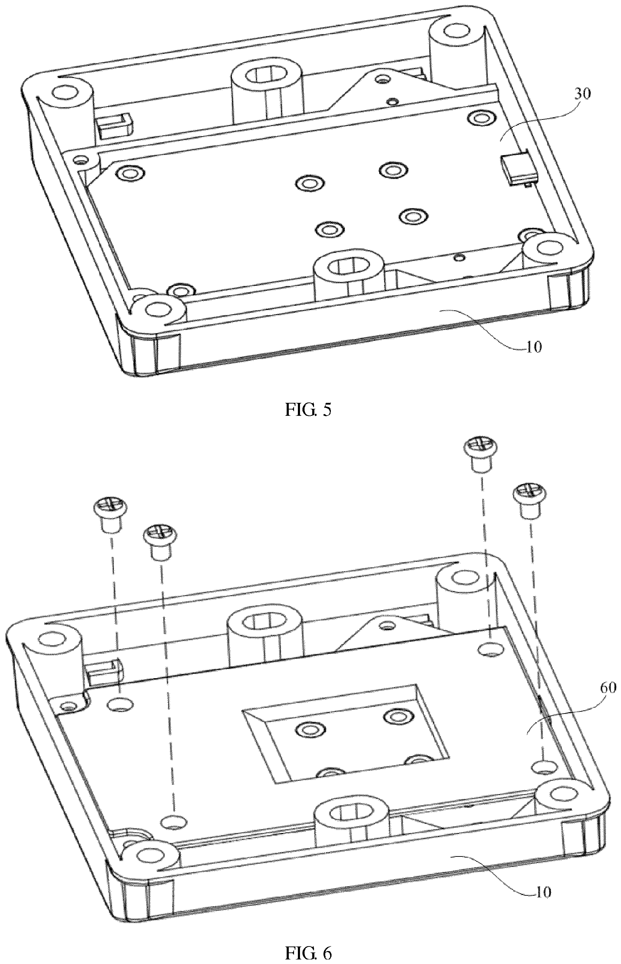

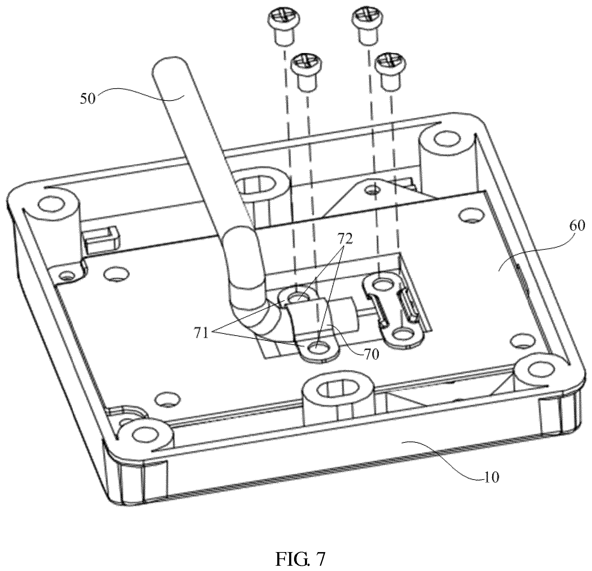

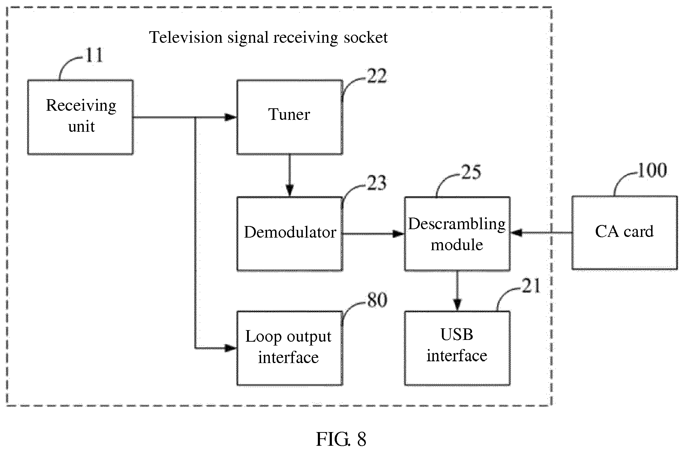

Referring to FIGs. 1 to 8, FIG. 1 is a schematic view of an overall structure of a television signal receiving socket according to an embodiment of the present utility model; FIG. 2 is an exploded view for FIG. 1; FIG. 3 is an enlarged schematic view of a CA card in FIG. 1; FIG. 4 is a schematic view of an assembly structure of a socket body and a bracket of a television signal receiving socket according to an embodiment of the present utility model; FIG. 5 is a schematic view in which a control circuit board is assembled in FIG. 4; FIG. 6 is a schematic view in which a cover plate is assembled in FIG. 5; FIG. 7 is a schematic view in which a television signal cable is assembled in FIG. 6; FIG. 8 is a schematic diagram of a circuit of a control circuit board in a television signal receiving socket according to an embodiment of the present utility model.

The present utility model discloses a television signal receiving socket. In an embodiment, the television signal receiving socket includes a socket body 10 with a cavity 12 and a control circuit board 20 received in the cavity 12. The socket body 10 is provided with a receiving unit 11 and a CA card slot 13 and a USB through hole 14 communicating with an external side of the socket body 10 and the cavity 12, where the USB through hole 14 is configured to receive a USB interface 21 in the control circuit board 20. The control circuit board 20 includes a tuner 22, a demodulator 23, and a descrambling module 25, where an input end of the tuner 22 is connected to the receiving unit 11, and an output end of the tuner 22 is connected to an input end of the demodulator 23; an output end of the demodulator 23 is connected to an input end of the descrambling module 25, and an output end of the descrambling module 25 is connected to the USB interface 21; and the descrambling module 25 is electrically connected to the CA card slot 13.

The CA card slot 13 is configured into which a CA card 100 is inserted. The CA card 100 stores a local key so as to work with the descrambling module 25 to decrypt an encrypted television program signal. The receiving unit 11 is configured to receive multiple kinds of television program signals, such as a web television signal, a cable television signal, and a wireless television signal; in addition, a same port is used for access to the web television signal and the cable television signal, and input of the web television signal or the cable television signal can be switched in selection. Because the receiving unit 11 can receive a television signal, such as the web television signal or the cable television signal, a user can watch more television programs and the user is provided with more choices. In addition, the tuner 22 is configured to convert a high-frequency signal received by the receiving unit 11 to an intermediate-frequency signal; the demodulator 23 is configured to demodulate the intermediate-frequency obtained after the conversion of the tuner 22 to a television signal complying with the MPEG/H264 coding standard; and the descrambling module 25 is configured to decrypt the encrypted television signal according to the local key stored in the CA card, transmits a decrypted television signal to the USB interface 21, and is connected, by using the USB interface 21, to a device (such as an Internet television, a PC, and a network set-top box) externally connected to the USB interface 21.

According to the television signal receiving socket in the present utility model, the socket body 10 is provided with the receiving unit 11 to receive multiple kinds of television signals. In addition, the socket body 10 is provided with the control circuit board 20 that decrypts a received television signal and a CA card slot 13 into which a CA card 100 is inserted, and an encrypted television program can be decrypted as long as the CA card 100 is inserted into the CA card slot 13. To watch an encrypted digital television program, a user only needs to connect an Internet television to the television signal receiving socket, without the need of adding other devices. Therefore, compared with the prior art in which a digital television receiving apparatus is used for watching an encrypted digital television program, the television signal receiving socket reduces using cost for the user; in addition, the television signal receiving socket may be directly installed on the wall, so as to save installation space and facilitates the user.

Further, for facilitating assembly, one end of the cavity 12 is set as an opening, a bracket 30 thread-connected to the socket body 10 is received in the cavity 12, one side of the bracket 30 faces the opening, and the CA card slot 13 is defined between the other side that is opposite to the side and the socket body 10, a card insertion opening 15 which is used to insert the CA card 100 into the CA card slot 13 is defined in one side of the socket body 10 corresponding to the USB through hole 14, the control circuit board 20 is arranged on one side of the bracket 30 deviating from the CA card slot 13, the bracket 30 is provided with a first through hole 101 communicating with the cavity 12 and the CA card slot 13 in a position thereof corresponding to a card holder 26 on the control circuit board 20, and when the CA card 100 is inserted into the CA card slot 13, in a position of the first through hole 101, a chip 100a in the CA card 100 abuts against and fits the card holder on the control circuit board 20. This structure is relatively simple and facilitates assembly and future maintenance. It can be understood that when the CA card 100 is inserted into the CA card slot 13 and the card holder 26 abuts against the chip 100a in the CA card 100, the CA card is electrically connected to the descrambling module 25 on the control circuit board 20, so that the descrambling module 25 can read the local key in the CA card 100, thereby implementing decryption on the encrypted television signal. The card holder 26 is mainly a SIM card interface.

Further, to strengthen protection for the socket body 10, a protective cover 40 is included. The protective cover 40 is arranged on the socket body 10, only an opening side of the socket body 10 is shown on the socket body 10, and other sides are shielded and protected by the protective cover 40. In addition, a through slot 401 is defined in a position in the protective cover 40 corresponding to the card insertion opening 15 and the USB through hole 14, where the through slot 401 is configured through which the CA card and the USB pass. Further, the socket body 10 is provided with a fastener 41, the protective cover 40 is provided with a fastener base 42 that is snap-fitted to the fastener 41, and the fastener 41 and the fastener base 42 are snap-fitted so as to fix and connect the protective cover 40 and the socket body 10.

Further, the television signal receiving socket further includes a television signal cable 50 connecting to the receiving unit 11, where the television signal cable 50 is configured to input the web television signal or the cable television signal to the receiving unit 11. It should be noted that the television signal cable 50 may transmit the web television signal and the cable television signal, thereby further saving cost.

Further, to protect the control circuit board 20, the control circuit board 20 is provided with a cover plate 60 on one side thereof deviating from the bracket 30, the cover plate 60 is thread-connected to the socket body 10, and a second through hole 102 through which the television signal cable 50 passes is defined in a position in the cover plate 60 corresponding to a cable television access end on the control circuit board 20. The cover plate 60 shields one side of the control circuit board 20 facing the opening, so that the control circuit board 20 is well protected.

Further, to securely fix the television signal cable 50, the control circuit board 20 is provided with a pressing buckle 70 configured to lock and fix the television signal cable 50 to the control circuit board 20 in a position thereof corresponding to the second through hole 102. The pressing buckle 70 may be in various forms. In the preferred embodiment, the pressing buckle 70 includes an arc-shaped body 71. The arc-shaped body 71 is provided with fixing parts 72 in two ends thereof, a screw hole 73 is defined on each of the two fixing parts 72, the bracket 30 is provided with a nut 74 penetrating the control circuit board 20 in a position thereof corresponding to the screw hole 73, a screw is used to pass through the screw hole 73 to connect to the nut 74, so that the pressing buckle 70 is fixed on the bracket 30, and locks and fixes the television signal cable 50 to the control circuit board 20.

Further, the control circuit board 20 is provided with at least one loop output interface 80, and the loop output interface 80 is electrically connected to the receiving unit 11. The loop output interface 80 is a reserved television signal transfer interface and used by other playing device to connect to the receiving unit 11 so as to receive a television program signal.

The foregoing description is a preferred embodiment of the present utility model but does not limit a patent scope of the present utility model. All equivalent structures or equivalent process changes that are made by using content of the specification and accompanying drawings in the present utility model and are directly or indirectly used in other related technology fields shall fall within the patent protection scope of the present utility model.

## Claims

1. A television signal receiving socket, comprising a socket body with a cavity and a control circuit board received in the cavity, wherein the socket body is provided with a receiving unit and defines a CA card slot and a USB through hole communicating with an external side of the socket body and the cavity, the USB through hole is configured to receive a USB interface in the control circuit board, and the control circuit board comprises a tuner, a demodulator, and a descrambling module; an input end of the tuner is connected to the receiving unit, and an output end of the tuner is connected to an input end of the demodulator; an output end of the demodulator is connected to an input end of the descrambling module, and an output end of the descrambling module is connected to the USB interface; and the descrambling module is electrically connected to the CA card slot.

2. The television signal receiving socket according to claim 1, wherein a television program signal received by the receiving unit comprises a web television signal and a cable television signal.

3. The television signal receiving socket according to claim 1, wherein one end of the cavity is set as an opening, a bracket thread-connected to the socket body is received in the cavity, one side of the bracket faces the opening, and the CA card slot is defined between the other side that is opposite to the side and the socket body, a card insertion opening which is used to insert the CA card into the CA card slot is defined in one side of the socket body corresponding to the USB through hole, the control circuit board is arranged on one side of the bracket deviating from the CA card slot, a first through hole communicating with the cavity and the CA card slot is defined in a position of the bracket corresponding to a card holder on the control circuit board, and when the CA card is inserted into the CA card slot, in a position of the first through hole, a chip in the CA card abuts against and fits the card holder on the control circuit board.

4. The television signal receiving socket according to claim 1, further comprising a protective cover, wherein the protective cover is arranged on the socket body, a through slot is defined in a position in the protective cover corresponding to the card insertion opening and the USB through hole, the socket body is provided with a fastener, the protective cover is provided with a fastener base snap-fitted to the fastener, and the fastener and the fastener base are snap-fitted to fix and connect the protective cover and the socket body.

5. The television signal receiving socket according to claim 2, further comprising a television signal cable connecting to the receiving unit, wherein the television signal cable is configured to input the web television signal or the cable television signal.

6. The television signal receiving socket according to claim 5, wherein the control circuit board is provided with a cover plate on one side thereof deviating from the bracket, the cover plate is thread-connected to the socket body, and a second through hole through which the television signal cable passes is defined in a position in the cover plate corresponding to a cable television access end on the control circuit board.

7. The television signal receiving socket according to claim 6, wherein the control circuit board is provided with a pressing buckle configured to lock and fix the television signal cable to the control circuit board in a position thereof corresponding to the second through hole.

8. The television signal receiving socket according to claim 7, wherein the pressing buckle comprises an arc-shaped body, the arc-shaped body is provided with a fixing part in each of two ends thereof, each of the two fixing parts defines a through hole, the bracket is provided with a nut penetrating the control circuit board in a position thereof corresponding to the screw hole, a screw is used to pass through the screw hole to connect to the nut, the pressing buckle is fixed on the bracket, and locks and fixes the television signal cable to the control circuit board.

9. The television signal receiving socket according to claim 3, wherein the card holder is a SIM card interface.

10. The television signal receiving socket according to claim 1, wherein the control circuit board is provided with at least one loop output interface, and the loop output interface is electrically connected to the receiving unit.
